Europäisches Patentamt

European Patent Office

Office européen des brevets

(19)

(11) EP 0 786 609 A2

## (12) EUROPEAN PATENT APPLICATION

(43) Date of publication:
30.07.1997 Bulletin 1997/31

(21) Application number: 97200114.3

(22) Date of filing: 15.01.1997

(51) Int Cl.6: **F16H 61/08**
// F16H59:36, F16H59:68,
F16H61:06

(84) Designated Contracting States:
DE FR GB IT

(30) Priority: 24.01.1996 US 590485

(71) Applicant: NEW HOLLAND U.K. LIMITED
Basildon, Essex SS14 3AD (GB)

(72) Inventors:
• Bulgrien, Garth H.
Ephrata, PA 17522 (US)

• Hansen, Charles A.
Lancaster, PA 17601 (US)

(74) Representative: Vandenbroucke, Alberic et al
New Holland Belgium NV.
Patent Department
Leon Claeysstraat, 3A
8210 Zedelgem (BE)

### (54) Calibration for transmission hydraulic clutch fill time

(57)     A solenoid controlled hydraulic clutch (70, 75) is calibrated for clutch fill time, i.e. the time interval between application of an actuating signal to the clutch solenoid and actual engagement of the clutch (70, 75). The clutch fill time is determined by blocking rotation of the output side of the clutch (70, 75) while driving the input side from the engine (7), applying successive actuating signals to the clutch (70, 75), each succeeding actuating signal being longer in duration than the preceding one, and determining when the speed of the engine (7) driving the clutch drops as a result of engagement of the clutch. The duration of the actuating signal which causes clutch engagement determines a fill factor which is stored in a non-volatile memory and subsequently used during powershift event sequences to control the time at which energization of the clutch (70, 75) is initiated. A fill factor is determined and stored for each on/off clutch (70, 75) in a transmission.

Fig. 2

## Description

The present invention relates to transmissions having electro-hydraulically actuated clutches and more particularly to a method and apparatus for calibrating the transmission clutches to account for variations in clutch fill time.

In low speed, high load situations such as those encountered by an agricultural tractor used for tillage, a powershift transmission, to provide good shift quality, must complete shifts with minimal or no interruption of torque through the transmission. Otherwise, the tractor will lose significant ground speed or may even stop during a shift. In a hydraulically actuated clutch, oil under pressure moves a piston to engage the clutch. There is some amount of piston travel before the clutch actually begins to engage. Variations exist in the fill time required to move the piston to the engagement point due to tolerances on the many parts involved. Variations of as little as .05 second from one transmission to the next can significantly affect shift quality.

US-A-4.989.471 discloses methods and apparatus for the calibration of clutches. In one of those methods, the transmission output shaft is restrained and a reference engine speed is established while no clutches are engaged. Hydraulic pressure to a clutch is increased in increments and the engine speed is sensed to determine when the engine slows down as a result of the clutch transmitting torque to the restrained output shaft. In this method the increments in pressure are obtained by varying the energizing current to the solenoid which controls the clutch. The value of the energizing current required to cause transmission of torque through the clutch is saved in memory and subsequently used to control the magnitude of a current applied to the clutch when it is to be energized.

In the patented method, there is a fixed waiting period after each increase in pressure, the waiting period being sufficient to allow the new pressure to take effect. Thus, the patented method does not determine the clutch fill time.

It is therefore an object of the present invention to provide a method of calibrating clutches to take into account the fill time.

Another object of the invention is to provide a method and apparatus for developing a value representing clutch fill time.

A further object of the invention is to provide a method and apparatus for controlling a clutch by measuring clutch fill time during a calibration interval to develop a fill time factor, and, when a shift requires that the clutch be energized, using the fill time factor to control the time at which the clutch is energized.

According to a first aspect of the present invention, a method for controlling a solenoid actuated hydraulic clutch in a transmission is provided, said clutch having an input side driven by an engine and an output side.

Said method is characterized in that it comprises the steps of :

- while said engine is running, applying an actuating signal to the solenoid of the clutch to cause engagement of said clutch while preventing rotation of the output side of said clutch;
- measuring the clutch fill time by measuring the interval of time between the time said actuating signal is applied to the clutch solenoid and the time the speed of said engine begins to decrease;
- converting the measured clutch fill time to a clutch fill factor; and,
- subsequently using said clutch fill factor to control the time of energization of said clutch during a shift event sequence requiring engagement of said clutch.

According to a second aspect of the present invention, a method for controlling a solenoid actuated hydraulic clutch having an input side driven by an engine and an output side is provided.

Said method is characterized in that it comprises the step of calibrating said clutch for fill time by,

a) applying a signal of a given duration to the clutch solenoid while said engine is running and while preventing rotation of the output side of the clutch,
b) sensing the speed of said engine to determine if the speed of the engine decreases in response to the signal applied to the clutch solenoid,
c) when the speed of said engine does not drop in response to a signal applied to the clutch solenoid, repeating steps a) and b) using a signal of longer duration, and,
d) when the speed of said engine drops in response to a signal, converting a value representing the duration of the signal which caused the speed drop to a clutch fill factor representing the time at which the clutch must be energized during a shift requiring engagement of the clutch.

According to a third aspect of the present invention a method is provided of calibrating clutches in a tractor transmission driven by an engine, the transmission having a plurality of solenoid actuated hydraulic on/off clutches.

Said method is characterized in that it comprises the steps of :

a) measuring the speed of said engine prior to engaging any of said clutches to determine a reference speed;

b) driving an input side of one clutch with said engine while preventing rotation of an output side of said one clutch;

c) energizing the solenoid of said one clutch with a signal of known duration;

d) sensing the speed of said engine to determine if the engine speed drops in response to said signal;

e) if the engine speed does not drop in response to said signal of known duration, repeating steps c) and d) until step d) determines that said engine speed has dropped;

f) when step d) determines that the engine speed has dropped, calculating a clutch fill factor from the duration of the signal which caused the drop in engine speed; and,

g) repeating at least steps b) through f) for each on/off clutch in said transmission.

In general, an energization signal of fixed duration is applied to a clutch while the output side of the clutch is prevented from rotating. The speed of the engine which drives the clutch is sensed. If the speed of the engine does not drop during the time the energization signal is applied, or within a short time after the energization signal is terminated, an energization signal of longer duration is applied to the clutch. The process is repeated until a drop in engine speed is detected. The duration of the energization signal which causes the engine speed to drop is taken as an indication of the clutch fill time and a fill factor value representing this time is saved in a non-volatile memory. In a preferred embodiment, each on/off clutch in a transmission is calibrated although it is also possible to calibrate feathering clutches.

A microprocessor executes an event sequence which controls the time of energization/de-energization of clutches during a shift. At start-up, the fill factors are retrieved from the non-volatile memory and stored in registers. When a shift requires that particular clutches be engaged, the fill factors for those clutches are utilized by the microprocessor during execution of the event sequence to control energization of the clutches.

A method in accordance with the present invention will now be described in greater detail, by way of example, with reference to the accompanying drawings, in which :

Figure 1 is a schematic diagram of an agricultural tractor powershift transmission control system;

Figure 2 is a schematic planar development of a three dimensional transmission having solenoid controlled hydraulic clutches;

Figure 3 is a waveform diagram illustrating energizing signals applied to clutches and the pressures developed in the clutches as a function of time for first and second cases where one of the clutches alternately has a short and a long fill time, respectively;

Figure 4 is a flow chart illustrating a CALIBRATE routine for generating a clutch fill factor;

Figure 5 is a flow diagram of a routine executed by a microprocessor to control a typical shift event sequence; and,

Figure 6 is a waveform diagram illustrating signal timings and clutch pressures for a shift from 9th to 10th gear.

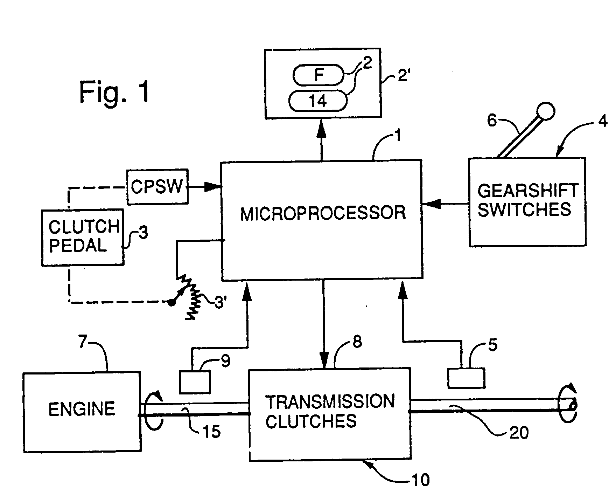

Figure 1 schematically illustrates an agricultural tractor powershift transmission control system as disclosed in US-A-4.989.471, the specification of which is incorporated herein by reference. The transmission system includes a microprocessor 1, a display 2 on an operator's control panel 2', a plurality of gearshift switches 4 which are selectively actuated by manually moving a gearshift lever 6, and a plurality of transmission clutches 8 associated with a transmission 10 which transmits power from a rotating power input shaft 15 to a power output or vehicle drive shaft 20. An engine 7 unidirectionally rotates shaft 15 and a sensor 9 senses rotation of shaft 15 to provide output signals indicating the speed of the engine 7. A sensor 5 senses rotation of shaft 20 to provide output signals representing vehicle speed. An operator-actuated clutch pedal 3 controls a potentiometer 3' and an analog output signal from the potentiometer is applied to microprocessor 1 to develop modulating signals which are applied to a selected clutch in a final set of feathering or inching clutches in transmission 10. The clutch pedal 3 also actuates a clutch pedal switch CPSW when the pedal is depressed to its limit of travel. The gearshift switches 4 are Hall-effect switches or similar devices which are actuated by magnets carried on the gearshift lever 6. Microprocessor 1 periodically samples the clutch pedal switch CPSW, the output of potentiometer 3', the switches 4, and the outputs of the speed sensors 5 and 9, and in response to the sensed conditions controls transmission clutches 8 to "select gears", i.e. select the direction and rate of rotation of output shaft 20 relative to input shaft 15.

Microprocessor 1 is conventional in that it includes RAM, ROM and non-volatile (NOVRAM) memories as well as DAC and ADC conversion capabilities.

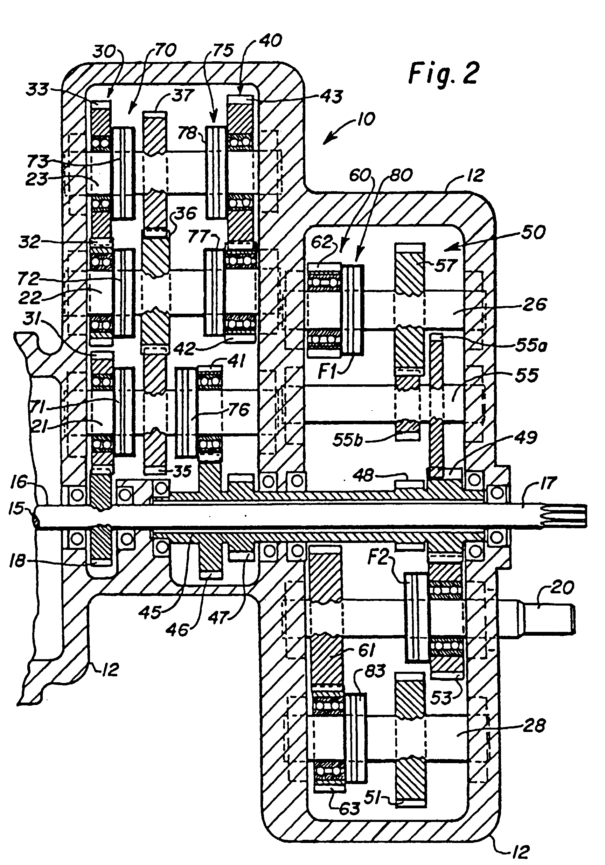

Figure 2 is a schematic planar development of the three dimensional transmission 10. As fully explained in US-A-4.989.471, the transmission has an initial clutch set 70 comprising three clutches 71, 72 and 73, an intermediate clutch set 75 comprising three clutches 76, 77 and 78, and a final clutch set 80 comprising two forward clutches 81 and 82 and a reverse clutch 83. By simultaneously actuating one clutch in each set, the output shaft 20 may be driven at any one of 18 forward or 9 reverse speed ratios relative to input shaft 15.

The clutches are solenoid controlled hydraulic clutches as shown in US-A-5.083.648. The initial and intermediate clutches are on/off clutches having a solenoid which is energized to engage the clutch or de-energized to disengage the clutch. The final clutches 81 and 82 are feathering or inching clutches, the clutch 82 serving the nine lower gear speed ratios and the clutch 81 serving the nine higher gear speed ratios. Each clutch has two solenoid controlled valves for controlling the clutch pressure. One valve admits/blocks hydraulic flow and the second valve serves to control the clutch pressure.

During a powershift, microprocessor 1 applies fixed magnitude signals to the solenoids for actuating one of the initial clutches 71, 72 or 73 and one of the intermediate clutches 76, 77 or 78. At the same time, microprocessor 1 also applies to the solenoid of clutch 81 or 82 a signal having a magnitude which varies with time. This causes a controlled change in the hydraulic pressure in clutch 81 or 82. The pressure moves a piston in the selected clutch to cause engagement of the clutch thus providing a controlled increase in the torque transmitted through the clutch.

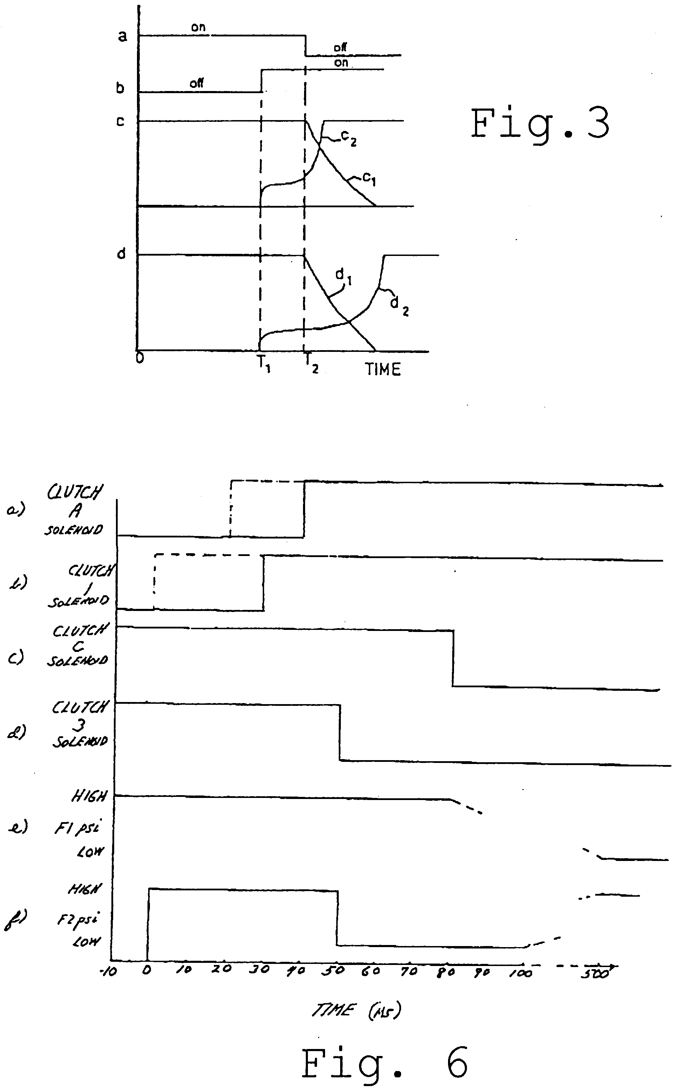

The time required to move a clutch piston to the point of clutch engagement varies from one clutch to the next because of manufacturing tolerances. This presents a problem particularly with respect to the on/off clutches 71-73 and 76-78 in the initial and intermediate clutch sets 70 and 75. Referring to Figure 3, assume that a shift is to be made between a gear ratio wherein clutch 77 is engaged and a gear ratio wherein clutch 78 must be engaged. Waveforms a and b represent the energizing signals to the solenoids of clutches 77 and 78, respectively. The energizing signal to the solenoid of clutch 78 is applied before the signal to the solenoid of clutch 77 is terminated. For a smooth shift it is desirable that the clutch pressure in clutch 78 reaches its maximum value shortly after the pressure in clutch 77 begins to decrease. If the fill time of clutch 78 is relatively short the pressure in the clutch (waveform $c_2$) will reach its maximum value shortly after the pressure in clutch 77 (waveform $c_1$) begins decreasing. On the other hand, if clutch 78 has a long fill time the pressure in the clutch (represented by curve $d_2$) does not reach its maximum value until the pressure in clutch 77 (represented by curve $d_1$) has decreased considerably below its maximum value. As the pressure in clutch 77 decreases, the clutch transmits less torque and the tractor slows down. In an extreme case where the tractor is under a heavy load and the fill time of clutch 78 is extremely long the forward motion of the tractor may even stop. In either case, the pressure in clutch 78 subsequently increases rapidly to its maximum value so that the tractor operator experiences a significant lurch.

The present invention provides a method and apparatus for calibrating individual clutches, particularly the on/off clutches of initial clutch set 70 and intermediate clutch set 75, so that when a shift is to take place a newly selected clutch of a set begins to transmit torque at the time the torque transmitted by a previously selected clutch of the same set begins to decrease.

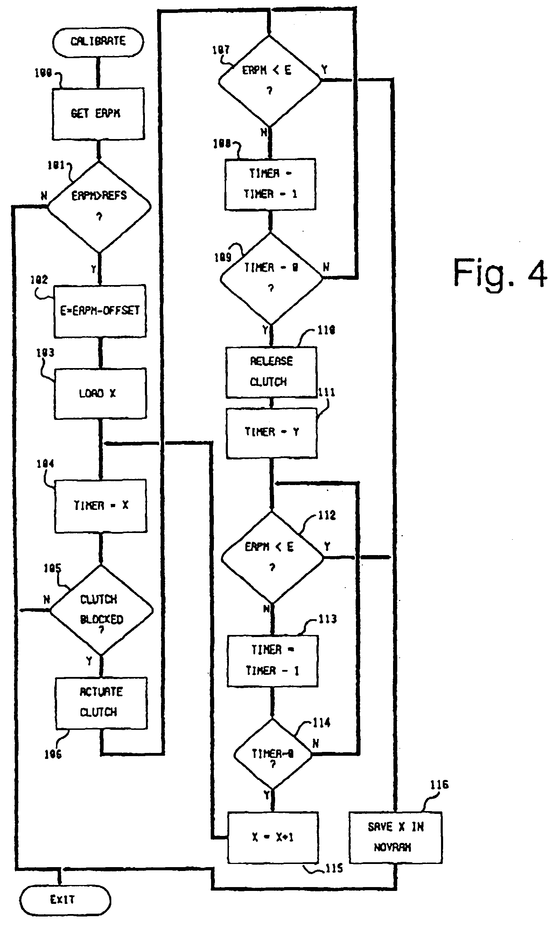

Figure 4 illustrates a CALIBRATE routine for calibrating a single clutch. The routine is stored in a program ROM in microprocessor 1 and may be executed at the factory after the transmission is installed in a tractor, or after field service. At step 100 of the CALIBRATE routine microprocessor 1 retrieves the latest indication of engine speed as measured by engine speed sensor 9. In this regard, microprocessor 1 includes a timer which counts clock pulses. Sensor 9 senses teeth on a gear (not shown) on shaft 15. Each time sensor 9 senses a tooth, a program interrupt is set and the count in the timer is stored. When the interrupt is recognized the stored timer value is compared to the previous value to calculate the engine speed. Step 100 retrieves the calculated engine speed ERPM.

The engine must be running at idle speed or above in order to successfully complete a clutch calibration. At step 101 the value of ERPM is tested to see if it is greater than some reference speed REFS. If it is not greater, an exit is made from the calibrate routine.

If ERPM is greater than REFS then at step 102 microprocessor 1 calculates a reference engine speed E by subtracting a small offset value OFFSET from the measured engine speed ERPM. A register X is then set to an initial time interval value X at step 103. This initial value of X is stored in permanent memory and is retrieved from the memory to load the time. The initial value of X is chosen to be less than the expected interval between the time an actuating signal is applied to the clutch solenoid and the time the clutch engages. Step 104 copies the value in X into a timer (TIMER). TIMER is decremented by clock pulses so that it reaches a count of zero when the interval specified by X has expired.

Successful execution of the CALIBRATE routine also requires that the output side of the clutch being calibrated be blocked or stopped. This can be accomplished by applying the vehicle brakes. At step 105 the microprocessor senses a brake switch and if the brakes are not being applied an exit is made from the CALIBRATE routine.

If the brakes are being applied, microprocessor 1 sets an output to begin applying an actuating signal (step 106) to the solenoid controlling the clutch. While the signal is being applied, the microprocessor senses the engine speed ERPM and compares it to E (step 107) to see if the engine speed has dropped below E. Assuming it has not, TIMER is decremented (step 108) and tested (109) to determine if the interval of time specified by the value in register X has expired.

Steps 107, 108 and 109 are repeated until TIMER has timed an interval corresponding to the value in register X. When TIMER has timed an interval corresponding to X, that is, when TIMER has been decremented to zero, the program advances to step 110 which releases the clutch by terminating the actuating signal.

Typically, the engine speed may drop after the clutch energizing signal is terminated, the delay being due to response times throughout the system. Therefore, it is necessary to sense for a drop in engine speed resulting from the signal applied at step 106 even after that signal is terminated at step 110. Step 111 sets TIMER to a value Y representing an interval during which the energizing signal terminated at step 110 might be expected to cause transmission of torque through the clutch. During the interval Y, ERPM is compared to E (step 112) and if the engine speed has not dropped TIMER is decremented (step 113) and tested for a zero value (step 114). If TIMER has not been decremented to zero, the program loops back to step 112.

The loop comprising steps 112-114 is repeated until the interval defined by Y has expired or a drop in engine speed is detected at step 112. Since the interval of clutch energization specified by the initial value of X is chosen to be less than that required for clutch engagement, there should be no drop in engine speed in response to the first clutch energization signal. Therefore, when step 114 detects that TIMER has been decremented to zero, step 115 increments the value in the X register and the routine loops back to step 104 where the new value of X is loaded into TIMER to time a new clutch energization signal of longer duration than the first signal.

The program loop comprising steps 104-115 is repeated as long as the output side of the clutch is blocked and ERPM does not drop below E. During each execution of the loop 104-115, the clutch is energized at step 105 and remains energized for the interval of time specified by the value in register X. During the interval the clutch is energized and for the interval Y after the energization signal is terminated, the engine speed is tested at steps 107 and 112, respectively, to determine if the engine speed has dropped as a result of the blocked clutch being engaged. If a drop in engine speed is not detected then X is incremented (step 115) so that the next time the loop is executed the clutch energizing signal is applied for a longer time.

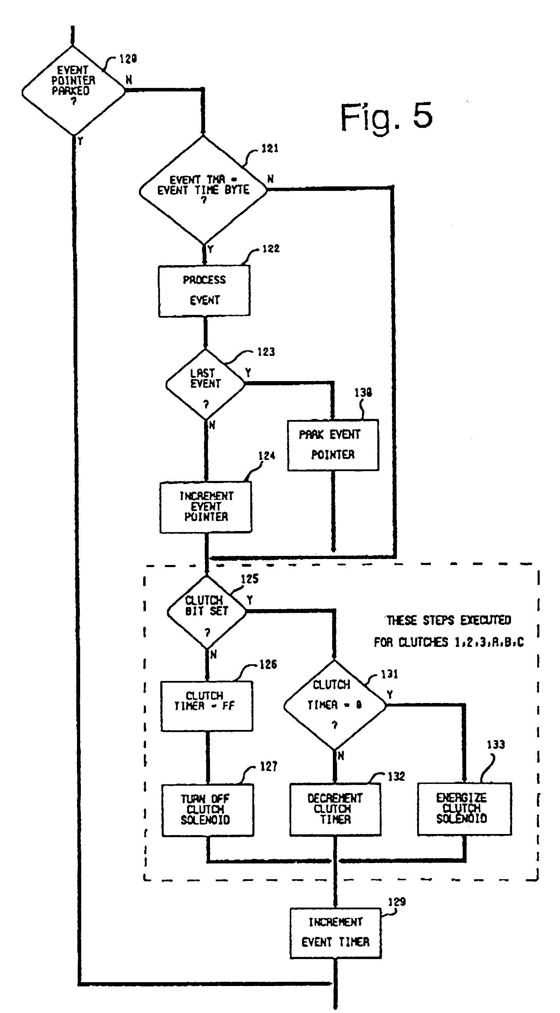

Assuming no problem in the system, X will eventually be incremented to the point where the clutch actuating signal is applied for a sufficient interval of time to cause clutch engagement. As the clutch engages, the load on engine 7 increases because the brakes are being applied to block the output side of the clutch against rotation. The increased engine load causes the engine speed to drop so that an execution of step 107 or 112 will find that ERPM is less than E. When this occurs the current value of X is used to derive a fill factor which is saved (step 116) in the non-volatile memory (NOVRAM) so that it will not be lost when the ignition switch is turned off or if the tractor battery should be discharged or disconnected. The derivation of the fill factor from X is described later with reference to Figures 5 and 6.

The fill factor that is saved at step 116 represents the clutch fill factor for the clutch being calibrated, that is, for the clutch that is actuated at step 105. The CALIBRATE routine of Figure 4 should be executed for each of the on/off clutches 71-73 and 76-78, with the fill factors for the six clutches being stored at addressable locations in the non-volatile memory. During start-up for normal operation of the tractor, the values are read from the non-volatile memory and stored in registers FF1-FF3 and FFA-FFC in the microprocessor for use in event sequences which control the clutches during shifting.

Figure 5 illustrates a typical shift event sequence. The microprocessor 1 periodically executes (at intervals of say 10 ms) a routine during which it samples the outputs from gearshift switches 4, sensors 5 and 9, potentiometer 3' and switch CPSW. If the microprocessor senses that the gearshift lever 6 is in the upshift or downshift position, it clears an EVENT TIMER and sets an event pointer to the base address of an event sequence which controls the energization/ de-energization of the clutches for that shift. For example, if the transmission is presently in 9th gear (an indication of the present gear is always held in a register) and the microprocessor senses that the gearshift lever has been moved to the UP position, the event pointer is set to the base address of a sequence of commands for energizing the clutch solenoids of clutches F2, 71 and 76 (10th gear) and de-energizing the solenoids of clutches F1, 73 and 78 (9th gear). For clarity, the clutches 71, 72 and 73 of the initial clutch set are referred to in the following description as clutches 1, 2 and 3 and clutches 76, 77 and 78 of the intermediate clutch set are referred to as clutches A, B and C.

Table I, below, illustrates the event sequence for a shift from 9th gear wherein clutches 3, C and F1 are engaged, to 10th gear wherein clutches 1, A and F2 are engaged. Each event or command in the sequence includes a time byte, a last event byte, two bytes for setting the pressure and rate of change of the pressure in clutch F1, two bytes for setting the pressure level and rate of change of the pressure in clutch F2, and a byte wherein individual bits determine the on/ off condition of respective clutches 1, 2, 3, A, B, C, F1 and F2. A further byte (not shown) controls the reverse clutch 83.

TABLE I

| EVENT TIME | LAST EVENT | F1 PSI | F1 SLOPE | F2 PSI | F2 SLOPE | CLUTCH ON/OFF | | | | | | | |
|---|---|---|---|---|---|---|---|---|---|---|---|---|---|
| | | | | | | F1 | F2 | 1 | 2 | 3 | A | B | C |
| 00 | 0 | HIGH | 0 | HIGH | 0 | 1 | 1 | 1 | 0 | 1 | 0 | 0 | 1 |
| 20 | 0 | | | | | 1 | 1 | 1 | 0 | 1 | 1 | 0 | 1 |
| 50 | 0 | | | LOW | | 1 | 1 | 1 | 0 | 0 | 1 | 0 | 1 |
| 80 | 0 | | NEG | | | 1 | 1 | 1 | 0 | 0 | 1 | 0 | 0 |
| 100 | 0 | | | | POS | | | | | | | | |
| 500 | 1 | | | | | 0 | 1 | 1 | 0 | 0 | 1 | 0 | 0 |

5

Figure 6 shows the timing of electrical signals applied to initial clutches 1 and 3 and intermediate clutches A and C as well as the pressures in final clutches F1 and F2 as the event sequence shown in Table I is executed. It should be noted that, because of clutch fill times, clutches 1 and A will not engage until sometime after their solenoids are energized. Preferably, these clutches should engage at some short interval (say 20 ms) after the pressure in clutch F1 begins to drop. That is, in the example shown the clutches should engage at T = 100 ms after the start of the shift. According to the present invention, the fill factors computed during execution of the CALIBRATE routine are used to control the times of energization of the clutch solenoids so that clutch engagement occurs at the desired time.

Figure 6 is drawn for the case where the fill times X or durations of the signals which cause clutches 1 and A to engage during execution of the CALIBRATE routine is approximately 70 ms and 60 ms, respectively. From Table I it may be noted that the on/off control bits for clutches 1 and A are first turned on at T = 0 and T = 20 of the event sequence, respectively. The fill factor of clutch 1 is thus computed as

$$\frac{(100-0)-70}{10}=3$$

and the fill factor for clutch A is computed as

$$\frac{(100-20)-60}{10}=2$$

As will be evident from the following description, the division by 10 is made because the microprocessor routine of Figure 5 which controls the event sequence to decrement the fill factors is carried out every 10 ms.

Assume that the microprocessor has determined that a shift from 9th to 10th gear is to take place, has cleared EVENT TIMER, and loaded EVENT POINTER with the starting address of the event sequence shown in Table I. As shown in Figure 6, the solenoids of clutches F1, 3 and C are already energized prior to T = 0 because the transmission is presently in 9th gear.

In Figure 5, at time T=0 the EVENT POINTER accesses the first event (step 120) and compares EVENT TIMER with the event time byte of the first event (step 121). Since the event time byte and EVENT TIMER are both zero, the routine advances to step 122 to begin processing the first event.

As shown in Table I, the F1 and F2 pressure level bytes of the first event contain codes representing a high clutch pressure and the F1 and F2 bits of the clutch on/off byte are both set. This causes the microprocessor to set output signals to the F1 and F2 clutch solenoids to keep the pressure in clutch F1 high and raise the pressure in clutch F2 to the high level. The purpose of energizing the solenoid of clutch F2 at this time is to fill the clutch with hydraulic fluid. As will be evident from the following description, the duration of the signal is 50 ms which is insufficient to cause clutch engagement.

In the first event the clutch on/off bits for clutches 1, 3 and C are on. As described below, these bits are later tested to provide a variable time of clutch energization for clutch 1, depending on its fill factor, and to control the solenoids of clutches 3 and C.

Next, the LAST EVENT byte of the first event is tested (step 123) and since this is not the last event of the sequence EVENT POINTER is incremented (step 124) so that on the next execution of the routine the second event will be accessed.

Digressing for a moment, the microprocessor includes a clutch timer for each of the clutches 1, 2, 3, A, B and C. The fill factor for a clutch is loaded into the timer for the clutch each time an event is processed and the on/off bit for that clutch is in the off state. Once a clutch timer is loaded with a fill factor, it is decremented once each time the routine of Figure 5 is executed provided the on/off bit for the corresponding clutch is set. When the clutch timer reaches zero the microprocessor sets an output signal to energize the clutch solenoid. Once a clutch timer reaches a zero value, it remains at zero until an event is processed wherein the clutch on/off bit for that clutch is in the off state.

Returning to Figure 5, steps 125-127 and 131-133 control the energization/de-energization of clutches 1,2,3,A,B and C according to the respective clutch fill factors and the on/off state of the clutch on/off bits in the event control byte. Steps 125-127 and 131-133 are carried out for each of the clutches 1,2, 3, A, B and C each time the routine of Figure 5 is executed.

In the assumed example, the on/off bit for clutch 1 is in the on state in the first event. The test at step 125 proves true so the CLUTCH 1 TIMER is tested (step 131) for a zero value. Since this is the first event being executed for the shift from 9th to 10th gear, CLUTCH 1 TIMER holds the fill factor (assumed to be 3) for clutch 1 and the test at step 131 proves false. The CLUTCH 1 TIMER is decremented to 2 at step 132 and the output signal to the clutch solenoid is not changed so the solenoid of clutch 1 remains de-energized.

The clutch on/off bits for clutches 2, A and B are all off in the first event so clutch timers for these clutches are loaded with the clutch fill factors (step 126) and the microprocessor sets output signals (step 127) to keep the clutch solenoids off. The fill factor loaded into CLUTCH A TIMER at this time is assumed to be 2.

The on/off bits for clutches 3 and C in the first event are on so when the test (step 125) proves true the clutch timers are tested for zero values (step 131). Since these clutches have been on during the interval the transmission was in 9th gear, both clutch timers contain zero values so step 133 is executed to set output signals to keep the solenoids of these clutches energized.

After all six on/off control bits have been processed for the first event, EVENT TIMER is incremented by 10 (step 129) and an exit is made from the 9-10 shift routine. Ten milliseconds later (T = 10) step 120 is again executed, and since EVENT POINTER was incremented at step 124 during processing of the first event the microprocessor accesses the second event and compares the event time byte with EVENT TIMER. Since EVENT TIMER holds a value of 10 and the time byte of the second event has a value of 20, the test at step 121 proves false and the microprocessor returns to step 125 to again process the clutch on/off control bits. Since the processing of the second event is bypassed, the clutch on/off control bits of the first event are still being held. Therefore, steps 125-127 and 131-133 are again executed in the same sequence as for the first event. Step 132 decrements CLUTCH 1 TIMER to 1 and step 129 increments EVENT TIMER so that it contains a value of 20.

AT T = 20 the microprocessor again reaches step 120 and since EVENT POINTER still points to the second event the time byte of the second event is compared (step 121) with EVENT TIMER. Since both hold a value of 20, processing of the second event begins (step 122) and EVENT POINTER is incremented to 3 (step 124).

In the second event, the F1 and F2 clutch on/off bits are in the on state and the F1 and F2 pressure level bytes are blank so the clutch solenoids of both clutches are energized to maintain the high pressure level. The clutch on/off bits for clutches 1, 3, A and C are all on and the bits for clutches 2 and B are both off.

For clutches 2 and B, the test at step 125 proves false so the clutch timers for these clutches are loaded with the respective clutch fill factors (step 126) and signals are sent to the clutch solenoids (step 127) so that the clutches remain off. For clutches 3 and C, step 125 proves false and since the timers for these clutches are both zero (step 131) the microprocessor sets output signals (step 133) to keep the solenoids of these clutches energized. For clutches 1 and A, the tests at step 125 prove true. Since CLUTCH 1 TIMER holds a value of 1 and CLUTCH A TIMER holds a value of 2, these clutch timers are decremented to zero and 1 respectively, and the clutch solenoids remain de-energized.

Step 129 increments EVENT TIMER to 30 to complete the processing of the second event. When step 120 is executed at T = 30, EVENT POINTER accesses the third event of the sequence but since the time byte of the third event contains a value of 50 and EVENT TIMER contains a value of 30, the event is not processed and EVENT POINTER is not incremented. The on/off bits and F1 and F2 pressure control bytes of the second event continue to control energization of the clutches. When step 131 is executed it finds that CLUTCH 1 TIMER holds the value zero so the microprocessor sets an output signal to energize the solenoid of clutch 1. CLUTCH ATIMER holds the value 2 when step 131 is executed so the timer is decremented to 1 at step 132. EVENT TIMER is incremented (step 129) to the value 40.

At T = 40 the third event is again accessed at step 120 but since the time byte of the event (50) is not equal to EVENT TIMER when step 121 compares the two values the event is not processed and the bytes of the second event continue control of the clutches. The on/off control bits for clutches 2 and B are still off so the clutch timers for these clutches are again loaded with the clutch fill factors (step 126) and the microprocessor maintains output signals (step 127) to keep the clutch solenoids de-energized. The on/off control bits for clutches 1,3,A and C are all still on when step 125 is executed and step 131 determines that the clutch timers for these clutches hold the value zero so at step 133 the microprocessor sets output signals to energize the solenoids of these clutches. EVENT TIMER is then incremented to 50.

At T = 50 step 120 again accesses the third event but this time step 121 determines that the time byte of the event is equal to EVENT TIMER so the third event is processed (step 122) and EVENT POINTER is incremented (step 124) to point to the fourth event. The F2 pressure control byte in the third event contains a code which causes the microprocessor to set an output signal to the pressure control solenoid of the clutch to decrease the clutch pressure to a low level. The pressure control byte for clutch F1 is empty and the F1 on/off control bit is on so an output signal is set to keep the clutch engaged. The on/off control bits for clutches 2,3 and B are all off so the clutch timers for these clutches are all loaded with the clutch fill factors (step 126). Step 127 maintains the solenoids of clutches 2 and B de-energized. In addition, step 127 terminates the signal being applied to clutch 3. This begins the disengagement of the transmission from 9th gear. The on/off control bits for clutches 1, A and C are all on when step 125 tests these bits and since the clutch timer for each of these clutches holds a zero value when step 131 is executed, step 133 maintains the output signals energizing the clutches. Step 129 increments EVENT TIMER to 60.

At time T = 60 and again at T = 70 EVENT POINTER accesses the fourth event (step 120) but step 121 determines that EVENT TIMER is not equal to the event time byte so the event is not processed. The microprocessor, in response to the on/off control bits and F2 pressure level byte of the third event, continues to energize the on/off solenoids of clutches F1,F2,1,A and C and controls the pressure control solenoids of clutches F1 and F2 to maintain a high and a low pressure, respectively, therein. EVENT POINTER is not incremented but EVENT TIMER is incremented to 70 and then to 80.

At time T=80 EVENT POINTER again accesses the fourth event but this time step 121 finds that EVENT TIMER is equal to the time byte of the event so the event is processed (step 122) and EVENT POINTER is incremented to point to the fifth event. The F1 pressure control byte of the event contains a value designating a desired negative slope or rate at which the pressure in clutch F1 should be decreased. The microprocessor uses this value in a known manner to decrease the magnitude of an output signal to the pressure control valve of the clutch so that the clutch pressure decreases with time from the high pressure level. The F2 pressure control byte is blank so the pressure in this clutch is maintained at the low level designated by the F2 pressure control byte of the third event. The on/off control bits for clutches 1 and A are on so the microprocessor maintains (step 133) the signals energizing the solenoids of these clutches. The on/off control bits for clutches 2,3,B and C are off so the microprocessor sets output signals (step 127) to de-energize the clutch C solenoid and keep the solenoids of clutches 2,3 and B de-energized. Step 129 increments EVENT TIMER to 90.

At time T = 90 EVENT POINTER accesses the fifth event (step 120) and the comparison of EVENT TIMER with the time byte of the event (step 121) shows that the two are not equal. The event is not processed and EVENT POINTER is not incremented. The microprocessor maintains the same output signals to the solenoids of clutches F2, 1 and A as established during the fourth event but continues to decrease the magnitude of the signal applied to the pressure control solenoid of clutch F1. Step 129 increments EVENT TIMER to 100.

At time T = 100 EVENT POINTER again accesses the fifth event but this time step 121 finds that EVENT TIMER is equal to the event time byte so the event is processed. The F2 pressure control byte of the event holds a value representing the rate at which the pressure in clutch F2 should be increased to bring the clutch into engagement. The microprocessor uses this value to steadily modify the output signal to the pressure control solenoid of clutch F2 to thereby produce the desired rate of increase in the clutch. Meanwhile, the microprocessor steadily modifies the signal it applies to the pressure control solenoid of clutch F1 so that the clutch pressure continues to decrease. The microprocessor output signals to clutches 1,2,3,A,B and C established in response to the on/off control bits of the fourth event are continued so that the solenoids of clutches 1 and A are energized and the solenoids of clutches 2,3,B and C are not energized. Step 129 increments EVENT POINTER to the value 110.

For the next 390 ms step 121 is executed every 10 ms to access the sixth event but step 122 determines that the event time byte is not equal to EVENT TIMER. The event is not processed, EVENT POINTER is not incremented, and the microprocessor output signals established in response to the on/off bits of the fourth event continue to energize the solenoids of clutches 1 and A. The microprocessor output signal to the F1 clutch pressure control solenoid continues decreasing at the rate defined by the F1 pressure control byte of the fourth event and the output signal to the F2 clutch pressure control solenoid continues increasing at the rate defined by the F2 pressure control byte of the fifth event. During the 390 ms interval EVENT TIMER is incremented by 10 every 10 ms and reaches a count of 500.

When EVENT POINTER accesses the sixth event at T = 500, step 122 determines that EVENT TIMER is equal to the event time byte so the event is processed at step 122. By this time the pressure in clutch F1 should be at or near zero and the pressure in clutch F2 should be at or near its high level value. The F1 on/off bit in the sixth event is off so the on/off solenoid for clutch F1 is turned off to block hydraulic flow to the clutch. The F2 on/off bit is on in the sixth event so the microprocessor maintains the energizing signal to the on/off solenoid of clutch F2. The last event byte of the sixth event contains an indication that this is the last event of the event sequence. The last event indication is sensed at step 123 and EVENT POINTER is reset to zero at step 130. The on/off control bits 1 and A are on in the sixth event so the test at step 125 proves true for clutch 1 and clutch A. Furthermore, since the timers for these clutches still contain zero values the tests at step 131 prove true. At step 133 the microprocessor sets (continues) the clutch energizing signals to clutches 1 and A. These energizing signals are maintained as long as power is applied to the system and no further shift is initiated. EVENT TIMER is incremented at step 129 but this is of no consequence since the shift from 9th to 10th gear has been completed and the timer will be cleared before another event sequence is initiated.

From the foregoing description it is seen that the present invention provides a novel method of controlling solenoid actuated hydraulic clutches of a transmission to determine fill factors for the clutches and subsequently using the fill factors to control the time of energization of the clutches during a shift so that the clutches engage at an optimum time relative to the time other clutches disengage during a shift from one transmission gear ratio to another. The method is carried out by apparatus normally provided for control of the transmission. The calibration may be initiated at the factory after a transmission is installed in a vehicle, or may be initiated by an operator or service personnel after field service or as require by ageing or wear of the clutches. Although a specific embodiment has been described to illustrate the principles of the invention, it will be understood that various modifications and substitutions may be made in the described embodiment without departing from the spirit and scope of the invention as defined by the appended claims. Particularly, it should be noted that the relative times of solenoid engagement/disengagement described with reference to Figures 5 and 6 will vary according to the characteristics of a particular transmission and the clutches used therein.

Therefore, the relationship between the clutch fill times measured during the CALIBRATE routine and the fill factors will vary as the timing characteristics of the shift event sequences vary.

## Claims

1. A method for controlling a solenoid actuated hydraulic clutch (70, 75) in a transmission (10), said clutch having an input side. (15) driven by an engine (7) and an output side (20),
   characterized in that said method comprises the steps of :

   - while said engine (7) is running, applying an actuating signal to the solenoid of the clutch (70, 75) to cause engagement of said clutch while preventing rotation of the output side (20) of said clutch;
   - measuring the clutch fill time by measuring the interval of time between the time said actuating signal is applied to the clutch solenoid and the time the speed of said engine begins to decrease;
   - converting the measured clutch fill time to a clutch fill factor; and,
   - subsequently using said clutch fill factor to control the time of energization of said clutch (70, 75) during a shift event sequence requiring engagement of said clutch.

2. A method according to claim 1 characterized in that the step of measuring the clutch fill time comprises the further steps of :

   - sensing the engine speed prior to application of said actuating signal to produce a first speed value;
   - repetitively sensing the engine speed, at least while said actuating signal is being applied, to produce second speed values; and
   - comparing said first speed value with each of said second speed values to determine when the speed of the engine (7) begins to decrease.

3. A method according to claim 2 characterized in that the step of applying an actuating signal comprises applying one actuating signal after another, with each succeeding actuating signal being of longer duration than an immediately preceding actuating signal, the duration of an actuating signal which causes a decrease in the speed of the engine (7) being an indication of the clutch fill time.

4. A method according to claim 3 characterized in that said clutch fill factor is saved in a non-volatile memory, said step of subsequently using said clutch fill factor comprising the steps of retrieving the clutch fill factor from the non-volatile memory and, when a shift requiring energization of said clutch (70, 75) is initiated, delaying energization of said clutch for an interval of time after initiation of said shift, the delay being determined by said clutch fill factor.

5. A method for controlling a solenoid actuated hydraulic clutch (70, 75) having an input side (15) driven by an engine (7) and an output side (20),
   characterized in that said method comprises the step of calibrating said clutch (70, 75) for fill time by,

   a) applying a signal of a given duration to the clutch solenoid while said engine (7) is running and while preventing rotation of the output side of the clutch,
   b) sensing the speed of said engine (7) to determine if the speed of the engine decreases in response to the signal applied to the clutch solenoid,
   c) when the speed of said engine (7) does not drop in response to a signal applied to the clutch solenoid, repeating steps a) and b) using a signal of longer duration, and,
   d) when the speed of said engine (7) drops in response to a signal, converting a value representing the duration of the signal which caused the speed drop to a clutch fill factor representing the time at which the clutch must be energized during a shift requiring engagement of the clutch.

6. A method according to claim 5 characterized in that it further comprises the step of storing said clutch fill factor in a non-volatile memory.

7. A method of calibrating clutches (70, 75) in a tractor transmission (10) driven by an engine (7), the transmission having a plurality of solenoid actuated hydraulic on/off clutches (70, 75),
   characterized in that said method comprises the steps of :

a) measuring the speed of said engine (7) prior to engaging any of said clutches (70, 75) to determine a reference speed;

b) driving an input side of one clutch with said engine (7) while preventing rotation of an output side of said one clutch;

c) energizing the solenoid of said one clutch with a signal of known duration;

d) sensing the speed of said engine (7) to determine if the engine speed drops in response to said signal;

e) if the engine speed does not drop in response to said signal of known duration, repeating steps c) and d) until step d) determines that said engine speed has dropped;

f) when step d) determines that the engine speed has dropped, calculating a clutch fill factor from the duration of the signal which caused the drop in engine speed; and,

g) repeating at least steps b) through f) for each on/off clutch in said transmission.

EP 0 786 609 A2

Fig. 1

11

Fig. 2

Fig.3

Fig. 6

Fig. 4

EP 0 786 609 A2

Fig. 5

120
EVENT POINTER PARKED ?
N → 121
EVENT TMR = EVENT TIME BYTE ?
N →
Y ↓
122
PROCESS EVENT

123
LAST EVENT ?
Y → 130
PARK EVENT POINTER
N ↓
124
INCREMENT EVENT POINTER

THESE STEPS EXECUTED FOR CLUTCHES 1,2,3,A,B,C

125
CLUTCH BIT SET ?
Y →
N ↓
126
CLUTCH TIMER = FF

131
CLUTCH TIMER = 0 ?
Y →
N ↓

127
TURN OFF CLUTCH SOLENOID

132
DECREMENT CLUTCH TIMER

133
ENERGIZE CLUTCH SOLENOID

129
INCREMENT EVENT TIMER

15